## Europäisches Patentamt
## European Patent Office
## Office européen des brevets

(11) Veröffentlichungsnummer: **0 137 461**
**B1**

(12) **EUROPÄISCHE PATENTSCHRIFT**

(45) Veröffentlichungstag der Patentschrift:
**24.02.88**

(21) Anmeldenummer: **84111939.9**

(22) Anmeldetag: **05.10.84**

(51) Int. Cl.⁴: **C 10 J 3/20, C 10 J 3/30**

(54) Verfahren und Vorrichtung zur Erzeugung brennbarer Gase aus festen Brennstoffen.

(30) Priorität: **11.10.83 DE 3336860**
**06.04.84 DE 3412945**

(43) Veröffentlichungstag der Anmeldung:
**17.04.85 Patentblatt 85/16**

(45) Bekanntmachung des Hinweises auf die Patenterteilung:
**24.02.88 Patentblatt 88/8**

(84) Benannte Vertragsstaaten:
**AT BE CH DE FR LI LU NL SE**

(56) Entgegenhaltungen:
**DE-A-3 138 813**
**DE-A-3 150 167**
**DE-C-557 007**
**FR-A-909 315**

(73) Patentinhaber: **Fischer, Erhard, Hausener Strasse 34, D-5204 Lohmar 21 (DE)**

(72) Erfinder: **Fischer, Erhard, Hausener Strasse 34, D-5204 Lohmar 21 (DE)**

(74) Vertreter: **Werner, Hans- Karsten, Dr., Deichmannhaus am Hauptbahnhof, D-5000 Köln 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 137 461 B1

## Beschreibung

Gegenstand der vorliegenden Erfindung ist ein Verfahren und eine Vorrichtung zur Erzeugung brennbarer Gase aus festen Brennstoffen, bei welchem die erzeugten Gase abgesaugt, vorzugsweise auf hoher Temperatur gehalten und unmittelbar der bzw. den Brennstellen zugeführt werden.

Ein derartiges Verfahren und eine derartige Vorrichtung sind beispielsweise in der DE-A-31 50 167 beschrieben worden. Das dort beschriebene Verfahren ist insbesondere zur vollständigen Vergasung von Steinkohle und aufwendigen Reinigungsstufen für die erzeugten Gase und den hohen Ausnutzungsgrad der Wärme erhebliche Vorteile auf.

Bei der Vergasung von festen Brennstoffen wie Kohle wird die Zufuhr des Brennstoffes im allgemeinen durch die Höhe des Brennstoffes im Schacht geregelt; vgl. DE-C-501 408 sowie die nach diesem Prinzip bis zum heutigen Tage gebauten und betriebenen Gasgeneratoren für die Vergasung von Steinkohle. Aus der DE-C-557 007 der gleichen Anmelderin ist bekannt, die Zufuhr der zu vergasenden Kohle durch die Temperatur der abziehenden Gase zu steuern, wobei bei sinkender Gastemperatur die Brennstoffzufuhr elektromechanisch abgestellt und bei einer gewissen oberen Temperatur wieder eingeschaltet wird. Hierdurch sollte vermieden werden, daß bei nur sehr geringer Gasentnahme die optimale Vergasungstemperatur absinkt und sich das Gas in unerwünschter weise mit teerigen Bestandteilen anreichert oder der Brennstoff infolge Ausscheidung klebriger Stoffe zu einem zähen Kuchen zusammenbackt. Umgekehrt führt eine zu starke Entnahme von Gas zu zu hohen Temperaturen und damit zu Verlusten durch fühlbare Gaswärme sowie höheren $CO_2$-Gehalt des Gases. Nach einer bevorzugten Ausführungsform der DE-C-557 007 soll diese Regelung über die Gastemperatur nur zusätzlich zur Regelung über die Füllhöhe mit Kohlen eingesetzt werden, so daß die Regelung über die Temperatur der abziehenden Gase nur dann eingreift, wenn infolge starker, längerer Unterbelastung die Temperatur der Kohlenschicht erheblich sinkt. In der Praxis hat sich diese Regelung der Brennstoffzufuhr durch die Temperatur der abziehenden Gase nicht bewährt, so daß die DE-C-557 007 papierener Stand der Technik geblieben ist.

Aus der CH-A-229 382 ist bekannt, im oberen Teil des Generatorschachtes von Gasgeneratoren für feste Brennstoffe wie Holz, Holzkohle, Torf etc. die Temperatur zu messen, da diese Temperatur anzeigt, wann der zugeführte Brennstoff so weit abgebrannt ist, daß nachgefüllt werden sollte. Das Ergebnis der Temperaturmessung sollte mit Mitteln zum Fernanzeigen versehen werden, so daß beispielsweise der Fahrer eines mit einem Gasgenerator betriebenen Fahrzeuges im Führerstand rechtzeitig erkennen konnte, wann Brennstoff nachgefüllt werden mußte und wie lange der Brennstoffvorrat noch zur Fahrt reichen würde. Zur Steuerung einer automatischen Brennstoffzufuhr wurde die Temperaturmessung nicht eingesetzt.

Die vorliegende Erfindung hat sich die Aufgabe gestellt als festen Brennstoff Holzhackschnitzel zu verwenden, die zumindest in der Nähe von Sägewerken in erheblichem Umfang anfallen und preiswert zur Verfügung stehen. Vorversuche mit einer für Braunkohle ausgelegten Anlage gemäß DE-A-31 50 167 haben zwar gezeigt, daß auch Holzhackschnitzel prinzipiell verwenden können, jedoch hierbei zunächst erhebliche zusätzliche Schwierigkeiten auftreten, nämlich zunächst einmal bei der Zuführung der Holzhackschnitzel in den Generator und weiterhin durch rasche Verunreinigung und Verklebung des Ventilators und der Brenner.

Die Erfindung hat sich daher die weitere Aufgabe gestellt, das Verfahren und die Vorrichtung gemäß diesem Stand der Technik auch für die Verwendung von Holzhackschnitzeln als festen Brennstoff geeignet zu machen.

Diese Aufgabe konnte überraschenderweise und in besonders einfacher Weise dadurch gelöst werden, daß die Mengenzufuhr der Holzhackschnitzel ausschließlich durch die Temperatur der abgesaugten Gase geregelt wird, indem bei steigenden Temperaturen der abgesaugten Gase größere Mengen Holzhackschnitzel, bei sinkenden Temperaturen der abgesaugten Gase kleinere Mengen Holzhackschnitzel pro Zeiteinheit zugeführt werden, und daß bei zu hohen Temperaturen der abgesaugten Gase eine Abkühlung durch Einspritzen von Wasser erfolgt.

Diese Art der Regelung erscheint dem Fachmann zunächst ungewöhnlich, da es bisher üblich war, den herkömmlichen Verbrennungs- und Vergasungsanlagen bei steigenden Temperaturen weniger Brennstoff und bei sinkenden Temperaturen mehr Brennstoff zuzuführen. Holzhackschnitzel weisen jedoch die Besonderheit auf, daß sie im Gegensatz zu Braunkohle und Steinkohle bei der Zugabe zunächst einmal erhebliche Mengen an Wärme verbrauchen. In einer zweiten Stufe durch Zufuhr von Sauerstoff verbrennen die Holzhackschnitzel teilweise und geben Wärme ab. Während also bei herkömmlichen Anlagen der feste Brennstoff kontinuierlich oder in gleichmäßigen Portionen zugeführt wird und die zugeführte Menge bei steigenden Temperaturen gesenkt und bei sinkenden Temperaturen gesteigert werden muß, erfordern Holzhackschnitzel eine scheinbar wesentlich kompliziertere Steuerung der Mengenzufuhr. Überraschenderweise hat sich gezeigt, daß sich erfindungsgemäß die Mengenzufuhr der Holzhackschnitzel besonders einfach und sogar ausschließlich durch die Temperatur der abgesaugten Gase regeln läßt.

Weiterhin hat sich gezeigt, daß die Verunreinigungen des Gebläses und der Brenner bei Verwendung von Holzhackschnitzeln dadurch beheben lassen, daß man die Temperatur der abgesaugten Gase erheblich höher einstellt als bei Kohle oder Braunkohle, nämlich auf 380 bis 450°C. Zusätzlich empfiehlt es sich, geringe Mengen Heißluft aus dem Brennraum in das Brennerrohr zurückzuführen, um die Ablagerung von Teer und Phenolen zu verhindern. Als zusätzliche Maßnahme zur Steuerung des Verfahrens wird bei zu hohen Temperaturen der abgesaugten Gase Wasser zur Abkühlung eingespritzt. Eingespritztes Wasser wirkt einerseits sehr rasch und führt andererseits nicht zu unnötigen Wärmeverlusten, da die Verdampfungswärme des Wassers in Form von Dampf in brennbaren Gasen beigemischt bleibt und somit bis zum Brenner gelangt. Ein Teil des Wassers reagiert zusätzlich mit der heißen Holzkohle zu Wasserstoff und Kohlenmonoxid, die ebenfalls verbrennen.

Das erfindungsgemäße Verfahren kann ohne weiteres diskontinuierlich durchgeführt werden. Dazu werden Holzhackschnitzel portionsweise durch einen beidseitig verschließbaren Einfüllstutzen in den Generator eingegeben. Die Zugabe erfolgt stets dann, wenn die Temperatur der abgesaugten Gase einen einstellbaren oberen Wert erreicht hat. Die Zufuhr bewirkt eine rasche Abkühlung des Generators und der abgesaugten Gase. Eine erneute Zufuhr der Holzhackschnitzel erfolgt erst, wenn die obere Temperatur wieder erreicht ist. Erst wenn die obere Temperatur trotz Zuführung von Holzhackschnitzel oder wegen einer Störung der Zufuhr die obere Temperatur wesentlich überschreitet, erfolgt eine Abkühlung durch Einspritzen von Wasser.

Vorzugsweise wird das erfindungsgemäße Verfahren jedoch kontinuierlich durchgeführt. Hierzu werden die Holzhackschnitzel aus einem Vorratsbehälter kontinuierlich zwangsweise durch ein Rohr mit Stauraum dem Generator zugeführt. Die Zufuhr erfolgt vorzugsweise mit einem Schneckenförderer mit einem vorgesetzten Rohr, welches in den Generator reinragt und als Stauraum wirkt. Die Zuführung der Holzhackschnitzel durch den Schneckenförderer erfolgt in besonders einfacher Weise in drei verschiedenen Fördergeschwindigkeiten, die etwa im Verhältnis 0,5 : 1 : 2 stehen. Diese Fördergeschwindigkeiten erreicht man beispielsweise durch einen dreistufigen Getriebemotor. Dieser Getriebemotor wird bei normaler Temperatur der abgesaugten Gase auf der mittleren Geschwindigkeitsstufe laufen. Erhöht sich die Temperatur der abgesaugten Gase, wird die höhere Fördergeschwindigkeit eingeschaltet, erniedrigt sich die Temperatur der abgesaugten Gase, schaltet sich die geringere Fördergeschwindigkeit ein. Bei wesentlichem Überschreiten der oberen Temperatur wird auch bei dieser Verfahrensweise durch Einspritzen von Wasser gekühlt.

Eine weitere bevorzugte Ausführungsform regelt die zwangsweise Zuführung der Holzhackschnitzel stufenlos, beispielsweise durch ein stufenlos verstellbares Zwischengetriebe zwischen dem Motor und der Förderschnecke.

Der Vorratsbehälter des Schneckenförderers wird vorzugsweise automatisch nachgefüllt, sobald eine Mindestfüllhöhe unterschritten ist. Die Zufuhr zum Vorratsbehälter wird unterbrochen, sobald eine Höchstfüllmenge vorhanden ist. Eine derartige erfindungsgemäße Vorrichtung läuft voll kontinuierlich und bedarf praktisch keiner Überwachung durch Personal, insbesondere wenn die wichtigen Funktionen wie Mengenzufuhr, Wasserzufuhr und Absaugung mit Störanzeigen verbunden sind.

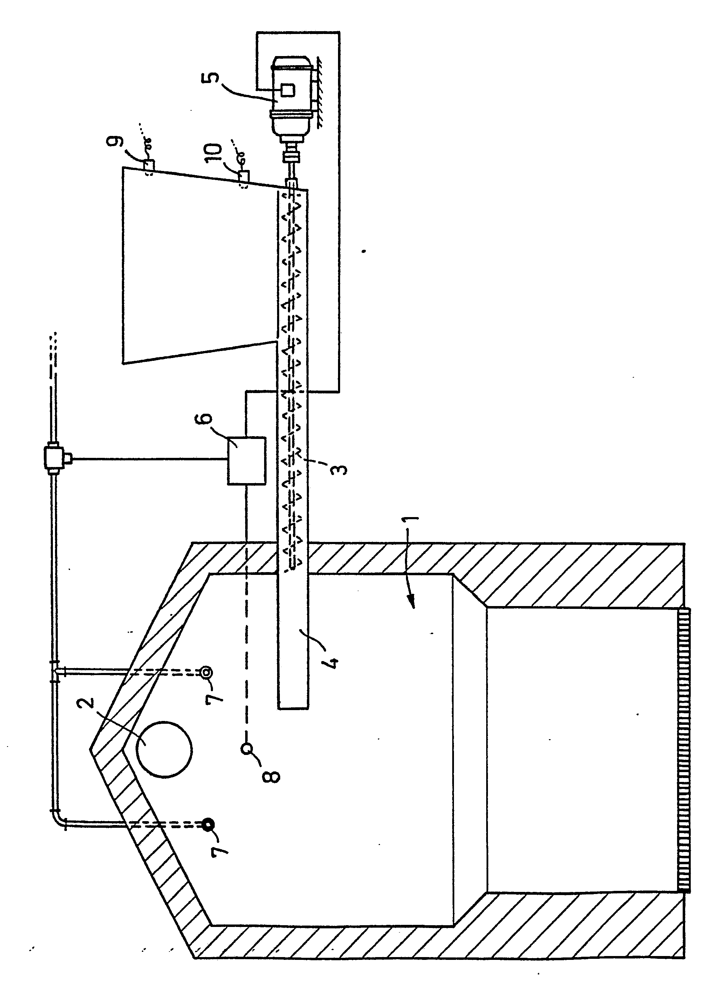

Das erfindungsgemäße Verfahren und eine Vorrichtung zur kontinuierlichen Mengenzuführung der Holzhackschnitzel sind in der Figur näher erläutert.

Hierin bedeuten:
1 den Generator,
2 die Absaugung für die heißen Gase,
3 einen Schneckenförderer,
4 einen in den Generator hereinragenden Stauraum,
5 ein dreistufiger Getriebemotor,
6 eine zentrale Steuerung,
7 Einspritzdüsen für Wasser,
8 Temperaturmessung im Gasraum,
9 Maximumschalter,
10 Minimumschalter für die Füllhöhe im Vorratsbehälter.

Bei Durchführung des erfindungsgemäßen Verfahrens werden die Holzhackschnitzel aus dem Vorratsbehälter durch den Schneckenförderer 3 durch den Stauraum 4 in den Generator 1 eingetragen. Der Schneckenförderer wird durch den dreistufigen Getriebemotor 5 angetrieben. Bei Normaltemperatur von ca. 420°C läuft der Motor mit 1500 U/min. Sinkt die Temperatur der abgesaugten Gase auf ca. 400°C, schaltet sich das Getriebe des Motors auf 750 U/min., so daß die zugeführte Menge an Holzhackschnitzeln etwa halbiert wird. Steigt die Temperatur des abgesaugten Gases auf ca. 440°C, schaltet der Getriebemotor auf 3000 U/min., so daß die zugeführte Menge an Holzhackschnitzeln etwa verdoppelt wird. Bei ca. 450°C schaltet sich die Wasserablöschung an und bei 440°C wieder aus. Sinkt die Temperatur der abgesaugten Gase unter 390°C wird der Befüllvorgang völlig abgeschaltet.

Der dreistufige Getriebemotor 5 wird bei stufenloser Regelung ersetzt durch einen Motor mit einem stufenlos regelbaren Getriebe.

Ein besonderer Vorteil des erfindungsgemäßen Verfahren besteht darin, daß man den Holzhackschnitzeln andere feste Brennstoffe wie Steinkohle, Braunkohle, Müllbriketts und/oder Kunststoffabfälle wie Zellglasreste, Polyethylenreste etc. beimischen kann, ohne daß die Zufuhr und Regelung gestört werden. Die Beimischung dieser anderen festen Brennstoffe kann gewünschtenfalls den Heizwert des erzeugten Gases erhöhen und damit höhere Temperaturen im Brennraum ermöglichen.

Die erfindungsgemäße Vorrichtung kann obendrein dazu dienen, Gase zu erzeugen, die ungereinigt oder gereinigt, ungekühlt oder gekühlt zum Antrieb von Verbrennungsmotoren verwendet werden können. Die Energieleistung des Reaktors und die notwendige Brennstoffzufuhr paßt sich durch die erfindungsgemäße Art der Zufuhr und Steuerung automatisch dem Verbrauch an.

## Patentansprüche

1. Verfahren zur Erzeugung brennbarer Gase aus festen Brennstoffen, bei welchem die erzeugten Gase abgesaugt, vorzugsweise auf hoher Temperatur gehalten und unmittelbar der bzw. den Brennstellen zugeführt werden, dadurch gekennzeichnet, daß als fester Brennstoff Holzhackschnitzel verwendet werden, und daß die Mengenzufuhr der Holzhackschnitzel ausschließlich durch die Temperatur der abgesaugten Gase geregelt wird, indem bei steigenden Temperaturen der abgesaugten Gase größere Mengen Holzhackschnitzel und bei sinkenden Temperaturen der abgesaugten Gase kleinere Mengen Holzhackschnitzel pro Zeiteinheit zugeführt werden und bei zu hohen Temperaturen der abgesaugten Gase eine Abkühlung durch Einspritzen von Wasser erfolgt.

2. Verfahren gemäß Anspruch 1, dadurch gekennzeichnet, daß die Temperatur der Gase im Bereich von 380 bis 450°C gehalten wird.

3. Verfahren gemäß einem der Ansprüche 1 oder 2, dadurch gekennzeichnet, daß die Holzhackschnitzel aus einem Vorratsbehälter kontinuierlich zwangsweise durch ein Rohr mit Stauraum zugeführt werden.

4. Verfahren gemäß Anspruch 3, dadurch gekennzeichnet, daß die zwangsweise Zuführung mit drei verschiedenen Fördergeschwindigkeiten erfolgt, die etwa im Verhältnis 0,5 : 1:2 stehen.

5. Verfahren gemäß Anspruch 3, dadurch gekennzeichnet, daß die zwangsweise Zuführung stufenlos geregelt ist.

6. Verfahren gemäß einem der Ansprüche 1 bis 5, dadurch gekennzeichnet, daß den Holzhackschnitzeln andere feste Brennstoffe wie Steinkohle, Braunkohle, Müllbriketts und/oder Kunststoffabfälle beigemischt sind.

7. Verfahren gemäß einem der Ansprüche 1 bis 6, dadurch gekennzeichnet, daß die abgesaugten Gase ungereinigt oder gereinigt, gekühlt oder ungekühlt zum Antrieb von Verbrennungsmotoren verwendet werden.

8. Vorrichtung zur Durchführung des Verfahrens gemäß einem der Ansprüche 1 bis 7, dadurch gekennzeichnet, daß die Zufuhr der Holzhackschnitzel als Schneckenförderer mit in den Generator hereinragenden Stauraum ausgebildet ist und entweder durch einen dreistufigen Getriebemotor oder über ein stufenlos regelbares Getriebe angetrieben wird.

## Claims

1. A process for generating combustible gases from solid fuel materials, wherein the generated gases are aspirated, preferably maintained at a high temperature and directly passed on to the combustion site(s), characterized in that chips from wood chopping are used as the solid fuel, and that the supplied amount of wood chips is exclusively controlled via the temperature of the aspirated gases so that larger amounts of wood chips are supplied per unit time at increasing temperatures of the aspirated gases and lesser amounts of wood chips are supplied per unit time at decreasing temperattures of the aspirated gases and a cooling by water-injection is effected in the case that the temperatures of the aspirated gases are too high.

2. The process according to claim 1, characterized in that the temperature of the gases is maintained within the range of from 380°C to 450°C.

3. The process according to anyone of claims 1 or 2, characterized in that the wood chips are continuously supplied from a reservoir by force through a pipe with a pile-up space.

4. The process according to claim 3, characterized in that the forced supply is effected by three different advance velocities being in a ratio of about 0.5 : 1:2.

5. The process according to claim 3, characterized in that the forced supply is continuously adjusted.

6. The process according to anyone of claims 1 to 5, characterized in that the wood chips have been admixed with other solid fuel materials such as coal, lignite, garbage briquets and/or plastics waste materials.

7. The process according to anyone of claims 1 to 6, characterized in that the aspirated gases, without or after purification and cooled or without having been cooled, are used to run internal combustion engines.

8. A device for carrying out the process according to anyone of claims 1 to 7, characterized in that the wood chip supplying device is in the form of a screw conveyor with its pile-up space extending into the generator and is run either by a three-strage geared motor or a via a continuously adjustable transmission.

## Revendications

1. Procédé pour la production de gaz combustibles à partir de combustibles solides qui consiste à successivement:
aspirer les gaz produits, les maintenir, de préférence, à une température élevée et les conduire directement au lieu ou aux lieux de combustion, caractérisé en ce que le combustible solide utilisé est sous la forme de copeaux de bois et que l'amenée de la quantité de copeaux de bois est contrôlée exclusivément par la température des gaz aspirés en augmentant les quantités de copeaux de bois alimentées avec une élévation des températures des gaz aspirés et en réduisant les quantités de copeaux de bois alimentées avec une baisse des températures des gaz absorbés tandis qu'aux températures trop élevées des gaz absorbés, un refrodissement par injection de l'eau est effectué.

2. Procédé selon la revendication 1, caractérisé en ce que l'intervalle de température des gaz est maintenue entre 380 et 450°C.

3. Procédé selon l'une des revendications 1 ou 2, caractérisé en ce que les copeaux de bois sont alimentés en continu et à circulation forcée d'un réservoir de stockage à travers un tuyau avec capacité de retenue.

4. Procédé selon la revendication 3, caractérisé en ce que l'alimentation forcée est effectuée à trois vitesses de transport ayant un rapport approximatif de 0,5 : 1:2.

5. Procédé selon la revendication 3, caractérisé en ce que l'alimentation forcée est contrôlée à variation continue.

6. Procédé selon l'une des revendications 1 à 5, caractérisé en ce que d'autres combustibles come le charbon de terre, lignite, briquettes de déchèts sont ajoutés aux copeaux de bois.

7. Procédé selon l'une des revendications 1 à 6, caractérisé en ce que les gaz aspirés sont utilisés sous la forme non-purifiée, purifiée, refroidissante ou non-refroidissante pour la commande des moteurs de combustion.

8. Dispositif permettant de réaliser le procédé selon l'une des revendications 1 à 7, caractérisé en ce que l'amenée des copeaux de bois se fait par un convoyeur à vis comprenant une capacité de retenue qui s'étend dans le générateur et que la commande est assurée ou par un moto-réducteur à trois vitesses ou par un engrenage à réglage continu.